# EUROPÄISCHE PATENTSCHRIFT

(11) **EP 0 773 053 B1**
(45) Veröffentlichungstag und Bekanntmachung des Hinweises auf die Patenterteilung: **05.02.2003**
(21) Anmeldenummer: 96117662.5
(22) Anmeldetag: 05.11.1996
(51) Int. Cl.: B01D 35/01

(54) **Filter für in einen geschlossenen Behälter fliessende Flüssigkeit**
Filter for liquid flowing into a closed reservoir
Filtre pour liquide s'écoulant dans un réservoir fermé

(30) Priorität: 10.11.1995 DE 19541962; 12.09.1996 DE 19637004
(43) Veröffentlichungstag der Anmeldung: 14.05.1997
(73) Patentinhaber: MAHLE Filtersysteme GmbH, 70376 Stuttgart (DE)
(72) Erfinder: Bauch, Emil, 74632 Langensall (DE); Gröner, Alfred, 74613 Öhringen (DE); Manz, Rolf, Dr., 74613 Öhringen (DE); Müller, Günther, 74613 Öhringen (DE)
(74) Vertreter: Patentanwalts-Partnerschaft, Rotermund + Pfusch + Bernhard

(56) Entgegenhaltungen:
- EP-A- 0 512 639
- DE-A- 2 235 246
- DE-C- 4 310 234

## Beschreibung

Die Erfindung betrifft ein Filter nach dem Oberbegriff des Patentanspruchs 1.

Derartige Filter sind aus DE 22 35 246 A und EP-A-0 512 639 bekannt.

Bei einem gattungsgemäßen Filter beschäftigt sich die Erfindung in erster Linie mit dem Problem, ein Entlüftungsfilter mit großer Kapazität und geringem Strömungswiderstand platzsparend an dem Filterkopf anbringen zu können. Dabei soll die Art der Filterausgestaltung sowie der Aufnahme an dem Filterkopf derart ausgebildet sein, daß das Filter wahlweise mit oder ohne ein Entlüftungsfilterelement ausgerüstet sein kann. Bei einem nicht eingesetzten Entlüftungsfilterelement soll das Bauvolumen des Filterkopfes um etwa die Größe des Entlüftungsfilterelementes kleiner als bei eingesetztem Entlüftungsfilterelement sein.

Gelöst wird dieses Problem durch eine Ausgestaltung eines gattungsgemäßen Filters nach den kennzeichnenden Merkmalen des Patentanspruchs 1.

Zweckmäßige Ausgestaltung sind Gegenstand der Unteransprüche.

Durch die Maßnahme nach Anspruch 2 ist es bei einem nach Anspruch 1 gestalteten Filterkopf besonders einfach möglich, das Bauvolumen des Filterkopfes danach anzupassen, ob das Filter mit oder ohne ein Entlüftungsfilterelement verwendet wird. Während bei der Verwendung des Filters mit einem Entlüftungsfilterelement ein an dem Deckel weit auskragender Randbereich vorgesehen wird, ragt dieser Randbereich bei einer Verwendung ohne Entlüftungsfilterelement nur geringfügig über den Umfang des Filterkopf-Grundkorpers hinaus.

Für eine Anpassung des Filterkopf-Bauvolumens an eine Verwendung dieses Filterkopfes mit oder ohne Entlüftungsfilterelement dienen darüber hinaus die Maßnahmen nach den Unteransprüchen 4 bis 8 in einer besonders vorteilhaften und zweckmäßigen Weise, wie nachstehend noch näher erläutert wird.

Soll kein Entlüftungsringfilterelement eingesetzt werden, brauchen die zu der Ringflanke führenden Verbindungen von dem Entlüftungsraum lediglich unterbrochen zu werden. Eine solche Unterbrechung kann bereits bei der Herstellung des Filterkopfes erfolgen. Die Unterbrechung kann derart ausgestaltet sein, daß sie nachträglich einfach heraustrennbar ist. Zu diesem Zweck kann die Unterbrechung als ein materialmäßig geschwächter Verbindungsbereich zwischen Entlüftungsraum innerhalb des Filterkopfes und der inneren Strömungsseite des Entlüftungsringfilterelementes ausgebildet sein.

Der Deckel kann im Prinzip mit seinem für ein Stützen des Entlüftungsfilterelementes auskragenden Rand auch bei einer Verwendung des Filters mit fehlendem Entlüftungsfilterelement verwendet werden. Es ist aber auch möglich, für die Anwendungsfälle mit und ohne Entlüftungsfilterelement unterschiedliche Deckel zu verwenden, wobei der Deckel für eine Verwendung bei fehlendem Entlüftungsfilterelement keinen besonders auskragenden Rand benötigt.

Bei einer besonders zweckmäßigen Ausgestaltung der Erfindung kann die Ringflanke an dem Filterkopf für die Auflage des Entlüftungsfilterselementes durch ein radial außen auflegbares Ringstück vergrößert werden. Dieses Ringstück kann im Querschnitt L-Form besitzen und im Bereich der Auflagefläche für das Entlüftungsfilterelement flächenschlüssig in die Ringflanke übergehen. Durch die im Querschnitt L-förmige Ausbildung des aufzusetzenden Ringstückes kann lotrecht unten nach radial außen durch das Entlüftungsfilterelement austretende abgeschiedene Flüssigkeit nicht aus dem Entlüftungsfilterelement austreten, so daß die Flüssigkeit die Möglichkeit hat, durch das Ringfilter zurück in das Behälterinnere zu fließen.

Der den Filterkopf verschließende Deckel kann wahlweise axial verschlossen oder mit einer verschließbaren Öffnung versehen sein, die in den Innenraum des Filters einmündet. Diese Öffnung kann für den Zulauf der zu filternden Flüssigkeit verwendet werden oder auch dazu dienen, Kontrollelemente zur Erfassung des Zustandes im Inneren des Filters aufzunehmen.

Ausführungsbeispiele der Erfindung sind in der Zeichnung dargestellt.

Es zeigen jeweils in einem Mittellängsschnitt
- Fig. 1: ein Filter ohne eingesetztes Entlüftungsringfilter,
- Fig. 2: ein Filter mit eingesetztem Entlüftungsringfilter.

Das Gehäuse des Filters besteht aus einem Filtertopf 1 und einem dicht damit verbundenen Filterkopf 2. Mit dem Filtertopf 1 ist das Filter in eine Öffnung in einer lotrecht oben liegenden Abschlußwand eines in der Zeichnung nicht dargestellten geschlossenen Behälters mit einem Innenraum 3 eingesetzt. Dabei stellt eine ringförmige Dichtung 4 an der Unterseite des Filterkopfes 2 eine Abdichtung gegenüber der Behälterwand dar.

In dem Filtergehäuse 1,2 ist ein das Filterelement 5,6 umgebender und sich über letzterem in dem Filterkopf 2 fortsetzender Zulaufraum 8 gebildet. In dem Zulaufraum 8 mündet ein an dem Filterkopf 2 vorgesehener Zulauf 9 für zu filternde Hydraulikflüssigkeit. Der Innenraum des Stützelementes 6 des ringförmigen Filterelementes 5 bildet einen Ablaufraum 11, der in einen Ablauf 12 ausmündet, der in den zu belüftenden Innenraum 3 des nicht dargestellten Behälters führt. Innerhalb des Stützelementes 6 ist in dessen oberem Endbereich ein Bypassventil 10 angeordnet, durch das in dessen geöffnetem Zustand Hydraulikflüssigkeit unter Umgehung des Filterelementes 5,6 direkt von dem Zulaufraum 8 in den Ablaufraum 11 fließen kann.

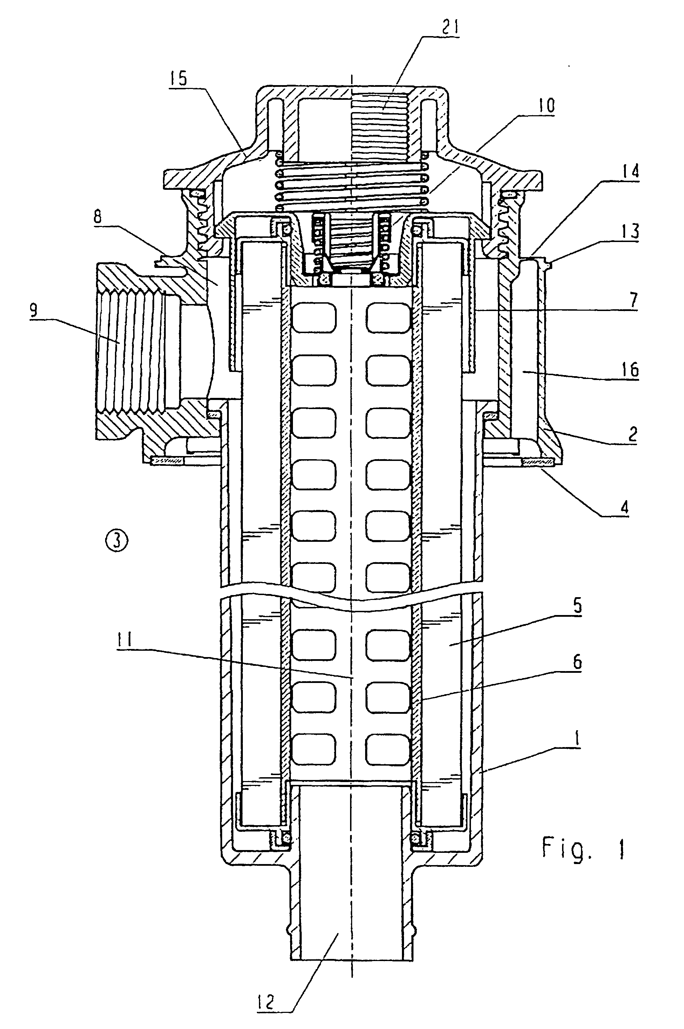

Bei der Ausführung nach Fig. 1 sind in einer Ringflanke 13 vorbereitete, aufbrechbare Verbindungen 14 noch geschlossen. Auf den Filterkopf 2 ist eine Deckscheibe 15 aufgeschraubt, die den Filterkopf 2 abschließt.

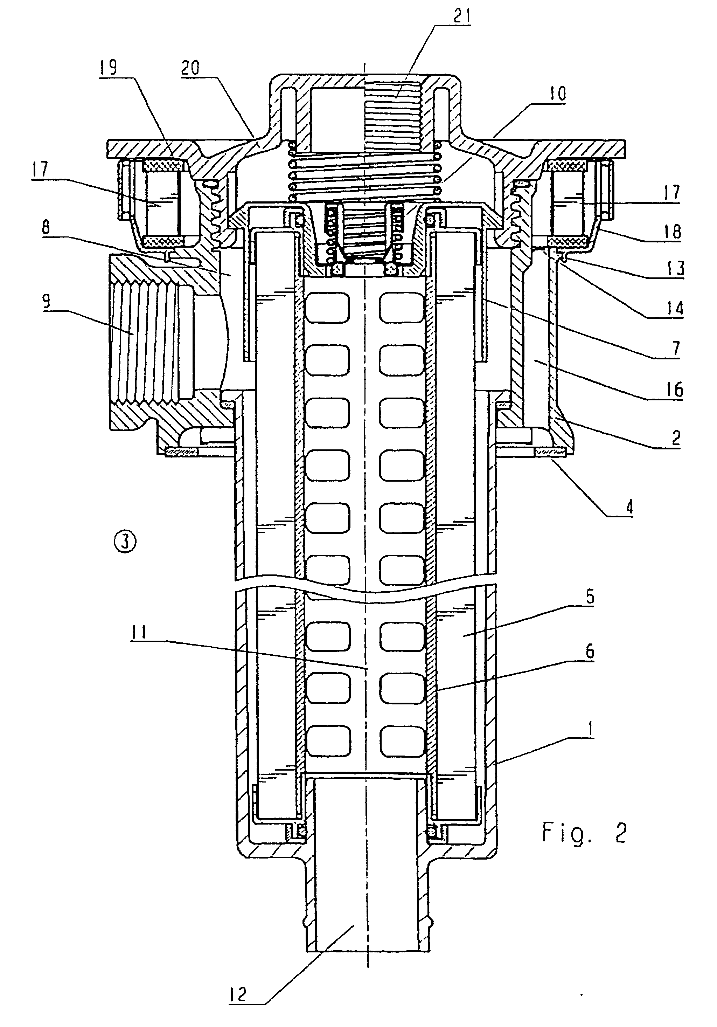

Bei der Ausführung nach Fig. 2 sind in der Ringflanke 13 die Verbindungen 14 aufgebrochen. Diese offenen Verbindungen 14 stehen über einen Entlüftungsraum 16 in dem Filterkopf 2 mit dem Innenraum 3 des nicht dargestellten Behälters in Verbindung. Auf die Ringflanke 13 radial außerhalb des Bereiches, in den die Verbindungen 14 münden, ist ein Belüftungsringfilterelement 17 dicht zwischen der Ringflanke 13 und einem auskragendem ringförmigen Randbereich 19 eines auf den Filterkopf 2 aufgeschraubten Deckels 20 angebracht. Die Auflagefläche an der Ringflanke 13 für das Entlüftungsringfilterelement 17 ist radial außen noch durch einen flächenschlüssig an die Ringflanke 13 aufgelegten Ringkörper 18 vergrößert. Dieser Ringkörper 18 hat im Querschnitt L-Form, so daß lotrecht unten das Entlüftungsringfilterelement 17 durchdringende abgeschiedene Flüssigkeit radial außen aufgefangen und durch das Entlüftungsringfilterelement hindurch in den Innenraum 3 des Behälters zurückgeführt werden kann.

Während bei den gezeigten Ausführungsbeispielen unterschiedliche Deckel 15,20 für die Anwendungsfälle mit und ohne Entlüftungsringfilter 20 verwendet werden, ist dies selbstverständlich nicht notwendig. Falls ein Deckel mit einem auskragenden Randbereich 19 verwendet wird, kann ein solcher Deckel vielmehr für beide Anwendungsfälle eingesetzt werden.

Die Deckel 15 und 20 können an ihrer axialen Stirnseite jeweils eine den Innenraum des Filters mit außen verbindende Öffnung in der Form eines Stutzens 21 besitzen. Der Stutzen 21 kann den Zulauf 9 ersetzen.

## Patentansprüche

1. Filter, insbesondere für in einen geschlossenen Behälter fließende Flüssigkeit, mit einem, einen Zulauf (9) enthaltenden, aus einem Grundkörper und einem Deckel (15, 20) bestehenden Filterkopf (2) und einem einen Ablauf (12) enthaltenden Filtertopf (1) mit einem austauschbaren, radial durchströmten Ringfiltereinsatz (5), bei dem
- der Filterkopf (2) ein axiales Ende des Filters bildet und den axial angrenzenden Filtertopf (1) verschließt,
- der Filterkopf (2) in Betriebslage des Filters oberhalb des Filtertopfes (1) liegt,
- der Filterkopf (2) an seinem dem Filtertopf (1) zugewandten axialen Ende den Filtertopf (1) radial überragt,
- der den Filtertopf (1) radial überragende Bereich des Filterkopfes (2) eine auf eine Öffnung eines Behälters, auf den das Filter aufsetzbar ausgestaltet ist, dicht aufsetzbaren Ringabschnitt besitzt,
- zwischen dem dichtenden Ringabschnitt des Filterkopfes (2) und dem Außenumfang des Filtertopfes (1) ein Freiraum vorgesehen ist,
- der Freiraum zwischen dem Filtertopf (1) und dem dichtenden Ringabschnitt des Filterkopfes (2) mit einem in dem Filterkopf (2) vorgesehenen Entlüftungsraum (16) verbunden ist,
**gekennzeichnet durch** die Merkmale
- der Filterkopf (2) ist zwischen seinen axialen Enden mit einer zu dessen oberem, freien Ende hin weisenden, radial überstehenden und den Filterkopf (2) auf dessen Umfang vollständig umschließenden Ringflanke (13) oder mit einem, den Filterkopf (2) in gleicher Weise umschließenden Ringbund versehen,
- ein ringförmig ausgebildetes Entlüftungsfilterelement (17) ist bei zur Atmosphäre über eine Verbindung (14) geöffnetem Entlüftungsraum (16) axial zwischen der Ringflanke (13) bzw. dem vorgenannten Ringbund und einem der Ringflanke bzw. dem Ringbund gegenüberliegenden Randbereich (19) des Deckels (20) dicht und von radial innen zur radial außen liegenden Atmosphäre hin durchströmbar eingespannt,
- die von dem Entlüftungsraum (16) zur Atmosphäre führende Verbindung (14) führt bei eingesetztem Entlüftungsfilterelement (17) in dessen radial innen liegenden, zur Atmosphäre hin gedichteten Innenraum und besitzt einen Bereich, der die Verbindung (14) bei einer Verwendung des Filters ohne ein Entlüftungsfilterelement (17) unterbricht und für eine Verwendung des Filters mit einem Entlüftungsfilterelement (17) entfernbar ausgebildet ist.

2. Filter nach Anspruch 1,
**dadurch gekennzeichnet,**
**dass** der Deckel (15, 20) mit einer in das Filterinnere führenden verschließbaren Öffnung (21) versehen ist.

3. Filter nach Anspruch 1 oder 2,
**dadurch gekennzeichnet,**
**dass** zur radialen Vergrößerung der Aufnahmefläche der an dem Filterkopf (2) vorgesehenen Ringflanke (13) für ein auf diese aufgesetztes Entlüftungsfilterelement (17) ein Ringkörper (18) an diese Ringflanke (13) angesetzt ist.

4. Filter nach Anspruch 3,
**dadurch gekennzeichnet,**
**dass** der die Ringflanke (3) bezüglich deren Aufnahmefläche vergrößernde Ringkörper (18) radial außen einen nach oben aufgestellten Rand besitzt.

5. Filter nach einem der Ansprüche 3 oder 4,
**dadurch gekennzeichnet,**
**dass** der angesetzte Ringkörper (18) einen flächenschlüssigen Übergang in die Aufnahmefläche der Ringflanke (13) besitzt.

6. Filter nach einem der vorhergehenden Ansprüche,
**dadurch gekennzeichnet,**
**dass** die entfernbare Unterbrechung eine für ein gewaltsames Entfernen vorgesehene Schwachstelle in dem Verbindungsbereich zwischen Ringflanke (13) und Entlüftungsraum (16) ist.

## Claims

1. A filter, in particular for liquid flowing into a closed reservoir, with a filter head (2) which comprises a base body and a cover (15, 20) and contains an inlet (9), and with a filter barrel (1) which comprises an outlet (12), with an exchangeable ring filter insert (5) with radial through-flow in which ring filter insert (5):
• the filter head (2) forms an axial end of the filter and closes off the axially adjacent filter barrel (1);
• with the filter in operational position, the filter head (2) is located above the filter barrel (1);
• at its axial end facing the filter barrel (1), the filter head (2) radially protrudes beyond the filter barrel (1);
• the region of the filter head (2) which radially protrudes beyond the filter barrel (1) comprises a ring section which can be tightly placed onto an aperture of a reservoir onto which the filter is designed to be placed;
• between the sealing ring section of the filter head (2) and the external circumference of the filter barrel (1) a clearance is provided; and
• the clearance between the filter barrel (1) and the sealing ring section of the filter head (2) is connected to a ventilation space (16) provided in the filter head (2),
**characterised by** the following features:
• between its axial ends the filter head (2) comprises a ring flank (13) which points to the upper free end of said filter head (2) and radially protrudes beyond it and circumferentially entirely encompasses said filter head (2), or comprises a ring shoulder which encompasses said filter head (2) in the same manner;
• with the ventilation space (16) open to the atmosphere via a connection (14), a ring-shaped ventilation filter element (17) is clamped into place axially between the ring flank (13) or the above-mentioned ring shoulder and a margin area (19) of the cover (20) which is situated opposite the ring flank or the ring shoulder, with said clamping being affected tightly so as to enable through-flow from radially inside to the atmosphere positioned radially outside; and
• with the ventilation filter element (17) in place, the connection (14) leading from the ventilation space (16) to the atmosphere, leads to its interior space which is located radially inward and which is sealed off against the atmosphere, and comprises a region which when the filter is used without a ventilation filter element (17), interrupts the connection (14) and which is designed to be removable for use of the filter with a ventilation filter element (17).

2. The filter according to claim 1,
**characterised in that**
the cover (15, 20) comprises a closable aperture (21) which leads into the filter interior.

3. The filter according to claim 1 or 2,
**characterised in that**
for radial enlargement of the accommodation surface of the ring flank (13) provided on the filter head (2) for a ventilation filter element (17) placed upon said ring flank (13), a ring body (18) is joined to said ring flank (13).

4. The filter according to claim 3,
**characterised in that**
the ring body (18) which enlarges the accommodation surface of the ring flank (3), radially on the exterior comprises a rim which is turned upward.

5. The filter according to one of claims 3 or 4,
**characterised in that**
the joined ring body (18) comprises an area-actuated transition to the accommodation surface of the ring flank (13).

6. The filter according to one of the preceding claims,
**characterised in that**
the removable interruption is a weak point intended for forcible removal, in the connection area between the ring flank (13) and the ventilation space (16).

## Revendications

1. Filtre, en particulier pour du liquide s'écoulant dans un réservoir fermé, comprenant une tête de filtre (2) qui contient une arrivée (9) et se compose d'un corps de base et d'un couvercle (15, 20), et un pot de filtre (1) qui contient une évacuation (12) et est muni d'une cartouche filtrante annulaire (5) interchangeable, balayée dans la direction radiale, dans lequel
- le tête de filtre (2) forme une extrémité axiale du filtre et ferme le pot de filtre (1) limitrophe dans la direction axiale,
- la tête de filtre (2) se situe au-dessus du pot de filtre (1) en position de service du filtre,
- la tête de filtre (2) dépasse dans le sens radial du pot de filtre (1) sur son extrémité axiale tournée vers le pot de filtre (1),
- la zone de la tête de filtre (2), dépassant dans la direction radiale du pot de filtre (1), présente une section annulaire pouvant être mise en place hermétiquement sur une ouverture d'un réservoir, sur lequel est configuré le filtre avec une possibilité de mise en place,
- un dégagement est prévu entre la section annulaire d'étanchéité de la tête de filtre (2) et le pourtour externe du pot de filtre (1),
- le dégagement entre le pot de filtre (1) et la section annulaire d'étanchéité de la tête de filtre (2) est relié à un espace d'aération (16) prévu dans la tête de filtre (2),
**caractérisé par** les caractéristiques
- la tête de filtre (2) est munie entre ses extrémités axiales d'un flanc annulaire (13) dirigé en direction de l'extrémité libre supérieure de cette dernière, en saillie dans la direction radiale, et entourant complètement la tête de filtre (2) sur le pourtour de cette dernière, ou d'un collet annulaire entourant de la même manière la tête de filtre (2),
- un élément filtrant d'aération (17) de réalisation annulaire est fixé hermétiquement dans la direction axiale, en présence d'un espace d'aération (16) ouvert à l'atmosphère par l'intermédiaire d'une jonction (14), entre le flanc annulaire (13) ou le collet annulaire précité et une zone de bordure (19) du couvercle (20) en vis-à-vis du flanc annulaire ou du collet annulaire, et peut être balayé du sens radial interne en direction de l'atmosphère située dans le sens radial externe,
- la jonction (14), menant à l'atmosphère à partir de l'espace d'aération (16), mène, avec l'élément filtrant d'aération (17) mis en place, dans l'espace interne de ce dernier situé dans le sens radial interne et étanchéifié en direction de l'atmosphère, et présente une zone qui coupe la jonction (14) pour une utilisation du filtre sans élément filtrant d'aération (17) et qui peut être retirée pour une utilisation du filtre avec un élément filtrant d'aération (17).

2. Filtre suivant la revendication 1, **caractérisé en ce que** le couvercle (15, 20) est muni d'une ouverture (21) obturable, menant à l'intérieur du filtre.

3. Filtre suivant l'une des revendications 1 et 2, **caractérisé en ce que**, pour l'agrandissement radial de la surface d'appui du flanc annulaire (13), prévu sur la tête de filtre (2), pour un élément filtrant d'aération (17) mis en place sur ce dernier, un corps annulaire (18) est rapporté sur ce flanc annulaire (13).

4. Filtre suivant la revendication 3, **caractérisé en ce que** le corps annulaire (18), agrandissant le flanc annulaire (3) par rapport à sa surface d'appui, présente dans le sens radial externe un bord orienté vers le haut.

5. Filtre suivant l'une des revendications 3 et 4, **caractérisé en ce que** le corps annulaire (18) rapporté présente une transition par coopération de surface avec la surface d'appui du flanc annulaire (13).

6. Filtre suivant l'une des revendications précédentes, **caractérisé en ce que** la coupure éliminable est un point faible prévu pour l'enlèvement de force dans la zone de jonction entre le flanc annulaire (13) et l'espace d'aération (16).
